(19)

Europäisches
Patentamt

European
Patent Office

Office européen
des brevets

(11) **EP 1 521 327 B1**

(12) **EUROPEAN PATENT SPECIFICATION**

(45) Date of publication and mention
of the grant of the patent:
**11.06.2008  Bulletin 2008/24**

(51) Int Cl.:
*H01M 8/24* (2006.01)    *H01M 8/04* (2006.01)
*H01M 8/12* (2006.01)

(21) Application number: **04009879.0**

(22) Date of filing: **26.04.2004**

(54) **Fuel cell modulation and temperature control**

Modulation und Temperaturkontrolleinrichtung für Brennstoffzellen

Système de modulation et de contrôle de la température de piles à combustible

(84) Designated Contracting States:
**DE FR GB NL**

(30) Priority: **29.09.2003   US 674053**

(43) Date of publication of application:
**06.04.2005   Bulletin 2005/14**

(73) Proprietor: **Hewlett-Packard Development
Company, L.P.
Houston, Texas 77070 (US)**

(72) Inventors:
• **Ulmer, Kurt
Corvallis
OR 97330 (US)**
• **Champion, David
Lobanon
OR 97355 (US)**

• **Herman, Gregory
Albany
OR 97321 (US)**
• **Mandilovich, Peter
Covallis
OR 97330 (US)**

(74) Representative: **Schoppe, Fritz et al
Patentanwälte
Schoppe, Zimmermann, Stöckeler & Zinkler
Postfach 246
82043 Pullach bei München (DE)**

(56) References cited:
**EP-A- 1 294 039          WO-A-00/69007
US-A1- 2002 187 375       US-A1- 2004 018 406
US-B1- 6 312 846**

Printed by Jouve, 75001 PARIS (FR)

## Description

TECHNICAL FIELD

The subject matter disclosed herein pertains to power modulation of fuel cells and temperature control of fuel cells.

BACKGROUND

Most fuel cells exhibit output and/or durability characteristics that depend heavily on temperature. For example, certain cells require a minimum operating temperature for an electrolyte to function properly while other cells degrade quickly when subject to temperature transients. Thus, substantial effort has been directed to temperature control of fuel cells. However, most temperature control schemes rely on heat exchange between a fuel cell and a heat exchange fluid. Fuel cell heat exchanger designs are typically complex and optimized for specific air and fuel flow conditions. Such schemes inherently rely on heat transfer phenomena, which may introduce substantial time constants that make temperature control sluggish at best. Consequently, a need exists for temperature control schemes that reduce lag times associated with heat transfer phenomena. As described herein, various exemplary arrangements and/or methods can provide for temperature control and/or control of fuel cell efficiency.

EP 1 294 039 A1 concerns a small fuel cell employing a polymer electrolyte thin film, by using a semiconductor process. A polymer electrolyte thin film fuel cell comprises a substrate having a plurality of openings; an electrolyte membrane-electrode assembly formed on the substrate so as to cover each of the openings, the assembly comprising a first catalyst electrode layer, a hydrogen ion conductive polymer electrolyte membrane and a second catalyst electrode layer which are formed successively; and fuel and oxidant supply means for supplying a fuel or an oxidant gas to the first catalyst electrode layer through the openings, and an oxidant gas or a fuel to the second catalyst electrode layer.

US 6,312,846 B1 discloses a fuel cell which is formed on a semiconductor wafer by etching channel in the wafer and forming a proton exchange membrane PEM barrier in the etched channel. The barrier divides the channel into two. A hydrogen fuel is admitted into one of the divided channels and an oxidant into the other. The hydrogen reacts with a catalyst formed on an anode electrode at the hydrogen side of the channel to release hydrogen ions (protons) which are absorbed into the PEM. The protons migrate through the PEM and recombine with return hydrogen electrons on a cathode electrode on the oxygen side of the PEM and the oxygen to form water

US 2002/0187375 A describes a fuel cell installation and a method for operating a fuel cell installation with a dynamic power control are provided. The dynamic power control is achieved by additionally connecting at least one subsystem which is kept ready for operation, a starter system and/or a low-voltage unit for nighttime operation and/or an on-board power supply.

It is the object of the present invention to provide an improved fuel cell system and method for operating same.

This object is achieved by a system according to claim 1, and by a method according to claim 4 or 8.

SUMMARY

An exemplary system includes a first fuel cell capable of providing an electrical output, a second fuel cell capable of providing an electrical output, and a switch circuit that includes one or more switches for arranging the electrical output of the first fuel cell and the electrical output of the second fuel cell in parallel or series to thereby adjust electrical output efficiency and heat production.

BRIEF DESCRIPTION OF THE DRAWINGS

Fig. 1 shows a diagrammatic illustration of a fuel cell.

Fig. 2 shows a plot of theoretical thermodynamic efficiency versus temperature for fuel utilization.

Fig. 3 shows a plot of cell power density versus temperature for an exemplary fuel cell.

Fig. 4A shows a plot of cell EMF and power density versus current density from an exemplary fuel cell at a given temperature.

Fig. 4B shows a plot of EMF efficiency versus power density for an exemplary fuel cell at a given temperature.

Fig. 5A shows a plot of power versus current for an exemplary two cell system in series and parallel configuration

Fig. 5B shows a plot of EMF efficiency versus power density for an exemplary two cell system. A shift in efficiency at a constant power is shown due to the rearrangement of the cells within the system.

Fig. 6A shows a plot of power versus current density for a multiple cell system in various series and parallel configurations.

Fig. 6B shows a plot of EMF efficiency versus power density for an exemplary multi-cell system. Shifts in efficiency are shown for operating points that correspond to a range of power outputs.

Fig. 7 shows exemplary schematics of fuel cell systems.

Fig. 8 shows an exemplary switchable arrangement for a first and second fuel cell that supply power to a load.

Fig. 9 shows an exemplary switchable system that includes a controller and a plurality of fuel cells.

Fig. 10 show an exemplary method that includes switching an electrical arrangement of at least some fuel cells in a multiple fuel cell system.

DETAILED DESCRIPTION

The following Detailed Description discusses exemplary fuel cells, exemplary fuel cell electrical arrangements or configurations and exemplary controllers. Various exemplary methods for operating or using such exemplary fuel cells, exemplary fuel cell arrangements or exemplary controllers are also discussed.

Fuel Cells

A fuel cell can generate electricity and heat by electrochemically reacting a fuel and an oxidizer using an ion conducting electrolyte for transfer of charged species without combustion. A typical fuel cell may generate an electrical potential through conversion of energy stored in a fuel (e.g., hydrogen, natural gas, methanol, etc.) and an oxidant (e.g., oxygen).

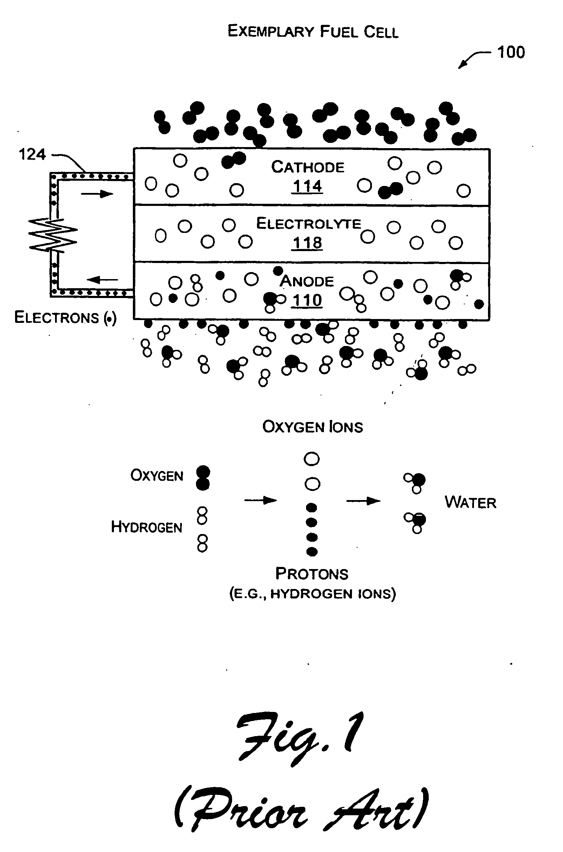

Fig. 1 shows a prior art solid oxide fuel cell 100. The fuel cell 100 includes an anode 110, a cathode 114 and an electrolyte 118. The anode 110 and the cathode 114 are electrodes while the electrolyte 118 serves as a type of membrane. In a typical operation of the fuel cell 100, an oxidant containing gas such as air is provided to the cathode 114, which may be referred to as an "air electrode", while a fuel is provided to the anode 110, which may be referred to as a "fuel electrode". For example, the cathode 114 may receive oxygen (from air) and the anode 110 may receive hydrogen (and optionally carbon monoxide, methane and other hydrocarbons). In this example, oxygen and hydrogen react to form water. This reaction is exothermic and it has an associated potential whereby the fuel cell 100 provides a flow path for electrons according to the potential.

Essential to operation of the fuel cell 100 is the electrolyte 118. As mentioned, the electrolyte 118 acts as a type of membrane, for example, an ion-conducting membrane. In the example given, the electrolyte 118 is an oxygen ion conducting membrane. If $H_2$ is used as a fuel, two protons or hydrogen ions are formed at the anode 110 from each $H_2$ molecule due to removal of electrons. An electron flow path or circuit 124 allows these electrons to become available at the cathode 114, which helps to drive oxygen ion formation from $O_2$. Oxygen ions conduct or permeate the electrolyte 118 and the anode 110, where the oxygen ions form water with protons or hydrogen ions. The electrochemical process may be represented by the following reaction equations:

$$O_2 + 4e^- \rightarrow 2O^{2-}$$

$$2H_2 \rightarrow 4H^+ + 4e^-$$

$$4H^+ + 2O^{2-} \rightarrow 2H_2O$$

At a temperature of 25°C and a pressure of 1 ATM, a hydrogen-oxygen fuel cell according to the reaction equations has an EMF of approximately 1.2 V.

In general, an electrolyte should have a high transport rate for desired ionic species while preventing transport of unwanted species. Various ceramics (e.g., electroceramics) have properties suitable for use as electrolyte. For example, a group of electroceramics, referred to sometimes as "fast ion conductors", "rapid ion conductors" or "superionic conductors", may support high transport rates for desired ionic species. A commonly used ceramic for oxygen ion ion-conducting membranes is yttria stabilized zirconia (YSZ). For an YSZ electrolyte to provide sufficient oxygen ion conductivity, fairly high temperatures are required (e.g., typically greater than 700°C), even for a thin electrolyte (e.g., less than approximately 10 $\mu$m). Of course, numerous costs are associated with operation at such high temperatures. For example, high cost alloys (e.g., superalloys, etc.) may be required as a fuel cell housing thereby increasing cost substantially. Stresses at such operating temperatures may also degrade anodes, cathodes and/or electrolytes and thereby increase cost. For example, a cathode may have a coefficient of thermal expansion that differs from that of an electrolyte. In such a situation, substantial shear stresses may develop at the interface between the cathode and the electrolyte and cause microfractures of the cathode and/or the electrolyte which, in turn, may diminish interfacial contact area and/or the ability of the electrolyte to reject unwanted species.

Further, operating temperatures and/or temperature cycling may have a detrimental impact on anode, cathode and/or electrolyte characteristics. For example, one or more metal components in an anode may have a tendency to agglomerate above certain temperatures. Temperature and/or oxidation-reduction cycling may also promote agglomeration. Agglomeration is known to occur in Ni-YSZ cermet anodes of solid oxide fuel cells and to be generally related to factors such as current density and fuel utilization. For example, evenly distributed nickel particles are desirable to maximize the interface or three-phase-boundary (TPB) between an anode and an electrolyte. Agglomeration occurs throughout an anode and causes an increase in "particle size" and a reduction in evenness of particle distribution. These effects decrease effective TPB and thereby increase anode losses. Eventually, a disparate distribution may result that wholly compromises interparticle (or interagglomerate) conductivity.

An agglomerate may further degrade an electrode upon oxidation. Oxidation typically occurs during and after cooling (e.g., as a part of a fuel cell's operational cycling). In Ni-YSZ cermet anodes, Ni particles or agglomerates typically oxidize during and/or after cooling. Upon oxidation, the particles or agglomerates increase in size. After a few heating and cooling cycles particles or agglomerates may become large enough to exert significant forces (e.g., stress) on, in this example, the ceramic YSZ matrix. Thus, oxidation and/or agglomeration may degrade or break a matrix and render an electrode inoperable or prohibitively inefficient. Hence, as mentioned in the Background section, a need exists for better temperature control of fuel cells. In turn, better temperature control may help to minimize various detrimental effects associated with temperature cycling and/or other variations in operational temperature.

For a solid oxide fuel cell (SOFC), a ceramic and metal composite, sometimes referred to as a cermet, of nickel-YSZ may serve as an anode while Sr-doped lanthanum manganite ($La_{1-x}Sr_xMnO_3$) may serve as a cathode. Of course various other materials may be used for the anode 110 or the cathode 114. To generate a reasonable voltage, a plurality of fuel cells may be grouped to form an array or "stack". In a stack, an interconnect is often used to join anodes and cathodes, for example, an interconnect that includes a doped lanthanum chromite (e.g., $La_{0.8}Ca_{0.2}CrO_3$). Of course other materials may be suitable.

It is to be understood that a fuel cell may be one of solid oxide fuel cells (SOFCs), proton conducting ceramic fuel cells, alkaline fuel cells, polymer electrolyte membranes (PEM) fuel cells, molten carbonate fuel cells, solid acid fuel cells, direct methanol PEM fuel cells and others (see, e.g., other examples below). Various exemplary fuel cells presented herein are solid oxide fuel cells.

An electrolyte may be formed from any suitable material. Various exemplary electrolytes as presented herein are at least one of oxygen ion conducting membrane electrolytes, proton conducting electrolytes, carbonate ($CO_3^{2-}$) conducting electrolytes, $OH^-$ conducting electrolytes, hydride ion ($H^-$) conducting and mixtures thereof. Regarding hydride ion electrolyte fuel cells, advances have been recently been demonstrated for molten hydride electrolyte fuel cell.

Yet other exemplary electrolytes are at least one of cubic fluorite structure electrolytes, doped cubic fluorite electrolytes, proton-exchange polymer electrolytes, proton-exchange ceramic electrolytes, and mixtures thereof. Further, an exemplary electrolyte is at least one of yttria-stabilized zirconia, samarium doped-ceria, gadolinium doped-ceria, $La_aSr_bGa_cMg_dO_{3-\delta}$, and mixtures thereof, which may be particularly suited for use in solid oxide fuel cells.

Anode and cathode may be formed from any suitable material, as desired and/or necessitated by a particular end use. Various exemplary anodes and/or cathodes are at least one of metal(s), ceramic(s) and cermet(s). Some non-limitative examples of metals which may be suitable for an anode include at least one of nickel, copper, platinum and mixtures thereof. Some non-limitative examples of ceramics which may be suitable for an anode include at least one of $Ce_xSm_yO_{2-\delta}$, $Ce_xGd_y O_2-Ce_xGd_yO_{2-\delta}$, $La_xSr_yCr_zO_{3-\delta}$, and mixtures thereof. Some non-limitative examples of cermets which may be suitable for an anode include at least one of Ni-YSZ, Cu-YSZ, Ni-SDC, Ni-GDC, Cu-SDC, Cu-GDC, and mixtures thereof.

Some non-limitative examples of metals which may be suitable for a cathode include at least one of silver, platinum, ruthenium, rhodium and mixtures thereof. Some non-limitative examples of ceramics which may be suitable for a cathode include at least one of $Sm_xSr_yCoO_{3-\delta}$, $Ba_xLa_yCoO_{3-\delta}$, $Gd_xSr_yCoO_{3-\delta}$.

Efficiency and Cell Output

A theoretical thermodynamic efficiency ($\eta_{Thermo}$) of a fuel cell may be determined based on the ratio of Gibbs free energy ($\Delta G_f$) to enthalpy of formation ($\Delta H_f$) of the supplied fuel:

$$\eta_{Thermo} = \Delta G_f / \Delta H_f \qquad (1).$$

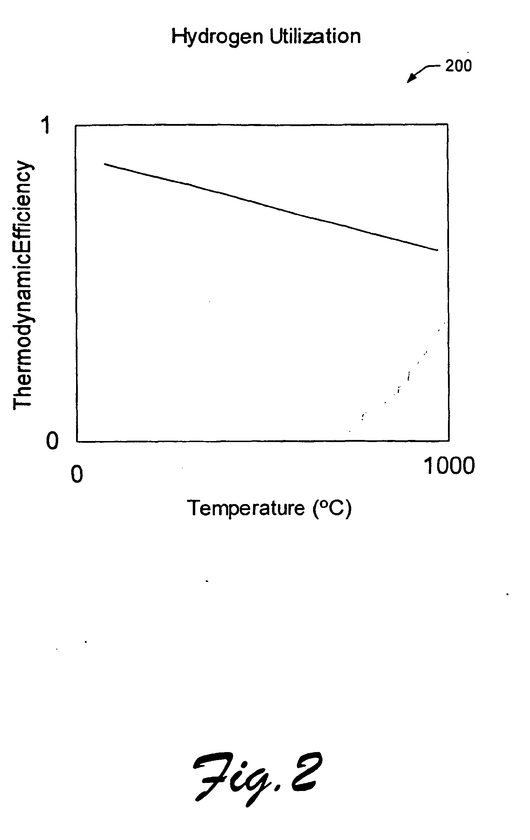

For water as a product, enthalpy of formation may be given as a "higher heating value" (HHV) corresponding to liquid or as a "lower heating value" (LHV) corresponding to vapor (e.g., steam). The thermodynamic efficiency ($\eta_{Thermo}$) generally decreases with respect to an increase in temperature due to a temperature related decrease in the Gibbs free energy (e.g., due to temperature and entropy term of the free energy equation). Fig. 2 shows a plot 200 representative of the relationship between theoretical thermodynamic efficiency and temperature for hydrogen utilization.

A relationship exists between maximum EMF of a cell and maximum efficiency and hence a relationship exists between operating voltage and efficiency. For a hydrogen fuel, if all the energy in the hydrogen fuel (e.g., calorific value, heating value, or enthalpy of formation), were transformed into electrical energy, then the EMF (e.g., open circuit voltage) would be given by:

$$EMF = -\Delta H_f / 2F \qquad (2),$$

wherein the factor "2" is the number electrons transferred and F is Faraday's constant (96,485 coulombs). Where HHV is used, EMF is approximately 1.48 V while if LHV is used, then EMF is approximately 1.25 V.

The actual EMF efficiency of a fuel cell may also be given in relation to an EMF value:

$$\eta_{Cell} = V_c/EMF(HHV \text{ or } LHV) \qquad (3).$$

In addition, a fuel cell may not use all fuel supplied to the cell. Therefore, a fuel utilization coefficient may be given as:

$$\mu_f = m_f(reacted) / m_f(supplied) \qquad (4),$$

wherein $m_f$ is the mass of fuel reacted by the cell (numerator) or supplied to the cell (denominator). Hence, the total efficiency may be given as:

$$\eta_{Total} = \mu_f {}^* \eta_{Cell} \qquad (5).$$

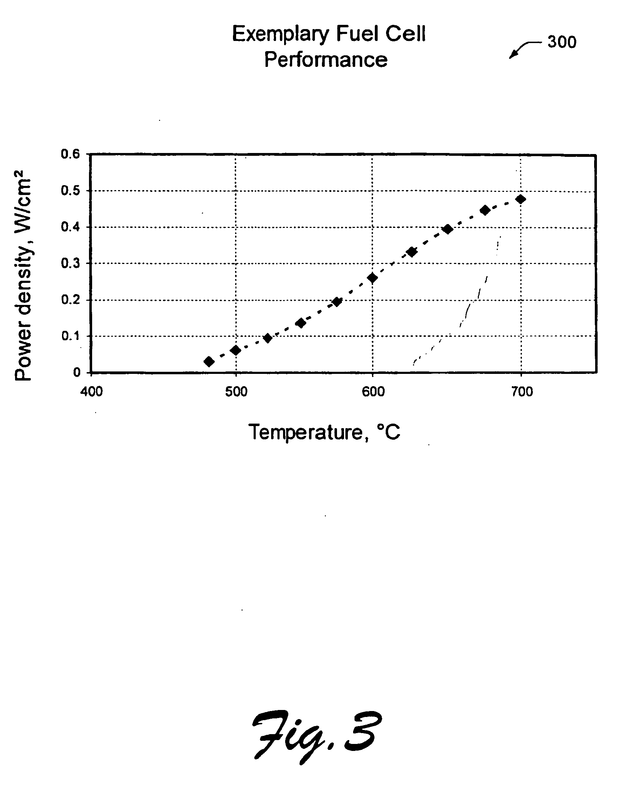

The total efficiency inherently depends on temperature due to the dependence of EMF on temperature, according to the theoretical thermodynamic efficiency. However, other temperature effects may be considered. Fig. 3 shows a plot 300 of power density versus temperature for a cell wherein lower temperatures correspond to lower power densities. Hence, power generation capability of a cell is inhibited by a decrease in cell temperature as shown in plot 300. Further, a decrease in power will typically cool a cell.

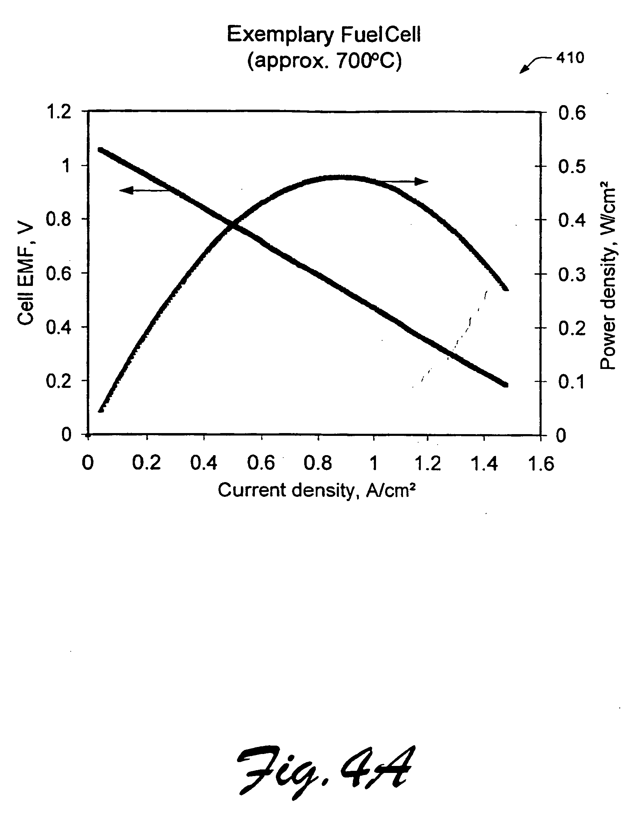

Fig. 4A shows a plot 410 of cell EMF and power density versus current density for an exemplary fuel cell at a temperature of approximately 700°C. According to the data, cell EMF decreases with respect to an increase in current density. Power density is defined as current density multiplied by EMF; hence, power density exhibits a maximum with respect to current density. An increase in temperature above 700°C for this exemplary cell will initially increase power density but in time could degrade cell performance. However, according to plot 300, a decrease in temperature will result in a significant decrease in EMF and hence power density.

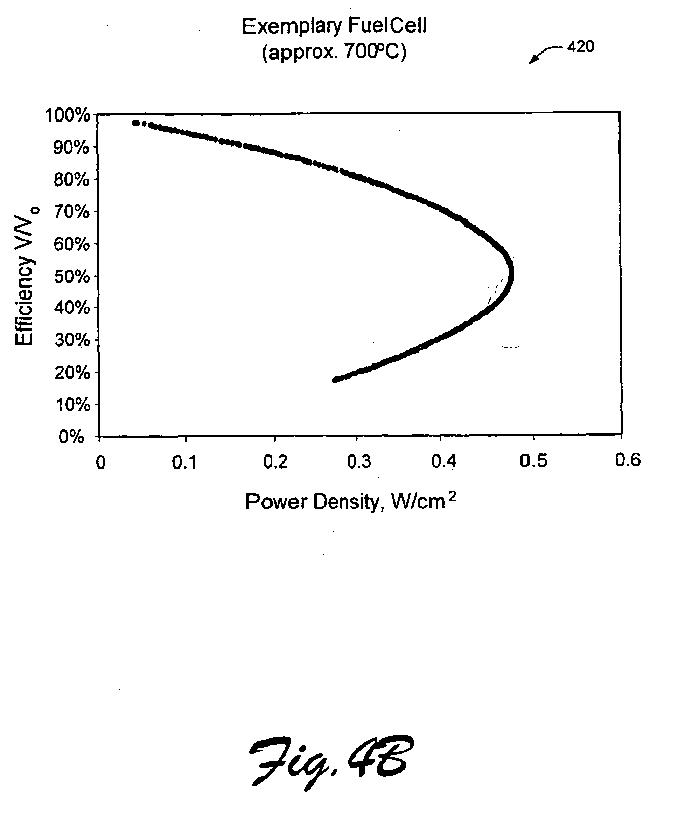

Fig. 4B shows a plot 420 of cell EMF efficiency versus power density for an exemplary fuel cell at a temperature of approximately 700°C. According to the plot 420 and the plot 410, as current density increases, cell EMF decreases and hence, cell EMF efficiency decreases. For example, if an EMF (LHV) of 15 V is assumed, then an efficiency of 80% would correspond to an EMF of approximately 0.9 V. From the plot 410, such a cell would be operating at a current density of approximately 0.36 Acm$^{-2}$ and a power density of approximately 0.3 Wcm$^{-2}$. Consider another example where a cell is operating at an EMF efficiency of 60% or an EMF of approximately 0.7 V. According to the plot 410, an EMF of approximately 0.7 V corresponds to a current density of approximately 0.6 Acm$^{-2}$, which yields a power density of approximately 0.42 Wcm$^{-2}$. However, the same power density may be achieved using a different EMF efficiency as well. For example, an EMF efficiency of approximately 30% corresponds to an EMF of approximately 0.36 V and a current density of approximately 1.18 Acm$^{-2}$. Thus, assuming for ease of calculation, a cell having 1 cm$^2$, a load that requires a power of approximately 0.42 W can be powered by the cell operating at a high EMF efficiency state or a low EMF efficiency state. The high EMF efficiency state corresponds to a high EMF and a low current while the low EMF efficiency state corresponds to a low EMF and a high current. According to various cell arrangements discussed herein, a cell is optionally switched between a high EMF efficiency state and a low EMF efficiency state while maintaining a constant power output. Of course, at the low EMF efficiency state, more fuel is utilized or consumed when compared to the high EMF efficiency state.

Table 1 below summarizes conditions associated with a low efficiency state (State 1) and a high efficiency state (State 2):

Table 1. Operational States

|  | State 1 | State 2 |
|---|---|---|
| EMF Efficiency | Low | High |
| Power | Equal to State 2 | Equal to State 1 |
| Fuel Consumption | High (higher T) | Low (lower T) |

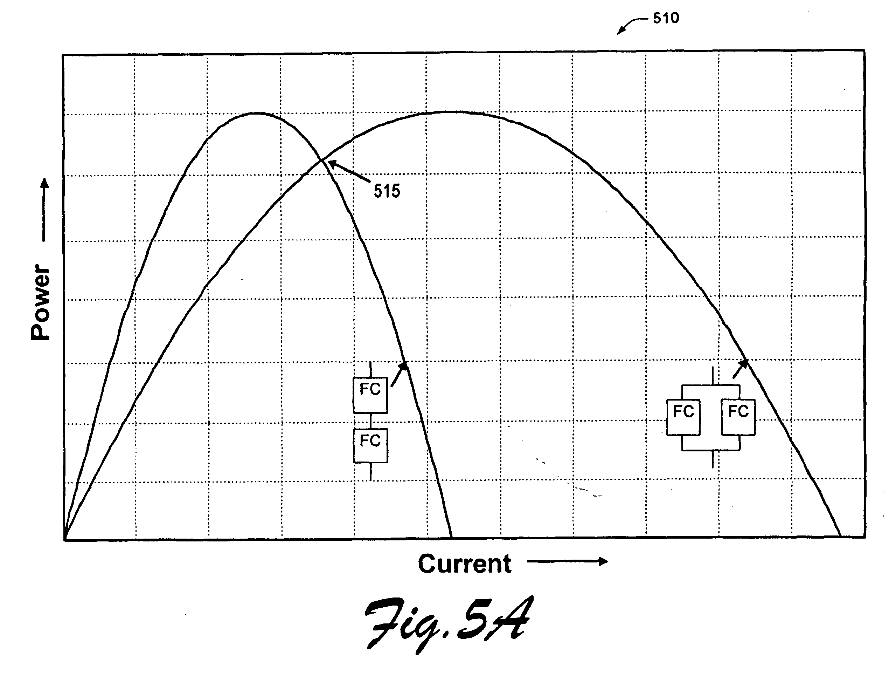

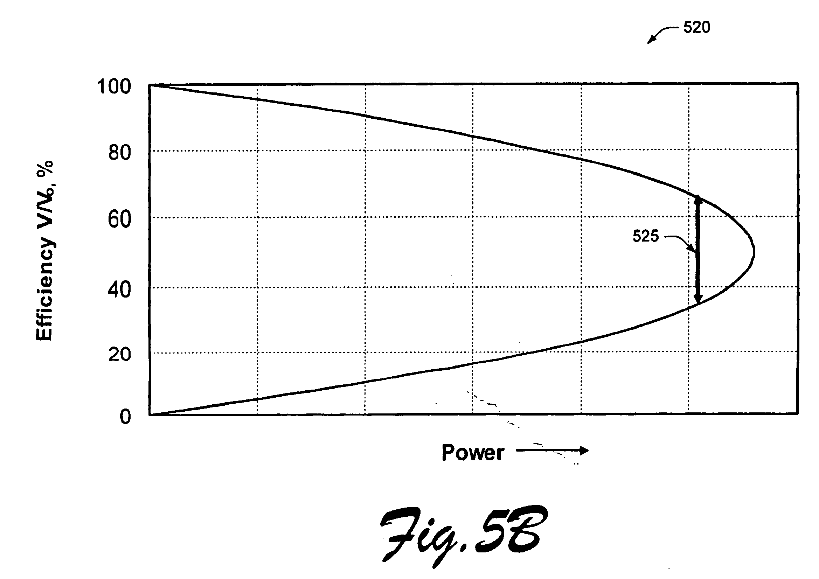

The information presented in Table 1 demonstrates that for a selected power, more than one state may exist for achieving the selected power. Fig. 5A and Fig. 5B further illustrate this principle as it may apply to a series cell system and a parallel cell system, which, as discussed further below, are optionally capable of being switched between series and parallel operation.

Fig. 5A shows a plot 510 of power versus current for a series cell system having two cells arranged in series and for a parallel cell system having two cells arranged in parallel. As shown in the plot 510, the maximum power of the series cell system equals the maximum power of parallel cell system; however, these maxima occur at different currents. The maximum power of the series cell system occurs at a lesser current than the maximum power of the parallel cell system.

Importantly, the plot 510 includes a point 515 where power and current are equal for the series cell system and the parallel cell system. The point 515 corresponds to a region of decreasing power with respect to increasing current for the series cell system and to a region of an increasing power with respect to increasing current for the parallel cell system. At this point, a switchable cell system can be switched from a high efficiency state to a low efficiency state or vise versa. Further, such a switch in configuration and hence efficiency at this point occurs without a change in current or voltage output of the two cell system.

Fig. 5B shows a plot 520 of efficiency versus power that corresponds to the series cell system and the parallel cell system of the plot 510 of Fig. 5A. According to the plot 520, a power maximum exists for an efficiency that is less than some maximum efficiency and at this power maximum, switching a switchable two cell system between a series and a parallel configuration does not result in a change in efficiency. However, as shown in the plot 510 of Fig. 5A, the point 515 where power and current coincide for the series and the parallel configuration is at a power that is less than the maximum power. Thus, a change in efficiency will occur when switching from a series configuration to a parallel configuration for the exemplary two cell system. A vertical line 525 in the plot 520 of Fig. 5B represents a shift from a series to a parallel configuration or vice versa. In the two cell system, only two configurations exist and therefore, at most, two efficiency states exist for a given power value. In general, a parallel configuration corresponds to a higher efficiency and a series configuration corresponds to a lower efficiency.

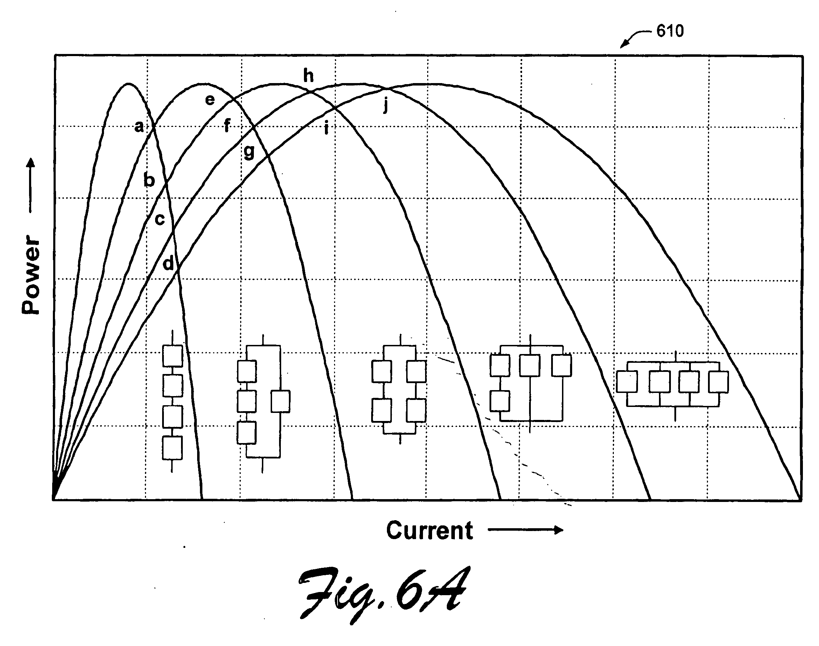

While Fig. 5A and Fig. 5B show conditions for two configurations, the number of possible configurations increases as the number of cells in a system increases. Fig. 6A shows a plot 610 of power versus current for an exemplary switchable cell system having four cells and five possible configurations. As configuration of the system takes on a more parallel configuration, the power versus current curve occurs over a wider range of current; hence, for such a configuration trend, the maximum power will occur at increasingly higher currents.

The plot 610 illustrates that nine points exist (labeled a-j) where the exemplary system configuration may be switched while maintaining power and current. Further, all of these points correspond to powers less than the maximum power and hence correspond to changes in efficiency. Yet further, none of the points correspond to more than two configurations. Thus, in this example, no points exist where a change between three configurations maintains constant power and current. Of course, for example, in the "3:1" configuration, switching the "1" cell with one of the "3" cells will maintain constant power and current.

According to the plot 610, a switch toward a parallel configuration results in a decrease in temperature while a switch toward a series configuration results in an increase in temperature. Further, the closer power is to the maximum power, the less the temperature will change when switching between configurations. Thus, at point "h", a small change in temperature or heat generation may be expected while at point "d" a larger change in temperature or heat generation may be expected. Yet further, in general, at lower power, a switch from one configuration to another configuration results in a larger efficiency change when compared to a switch at a higher power.

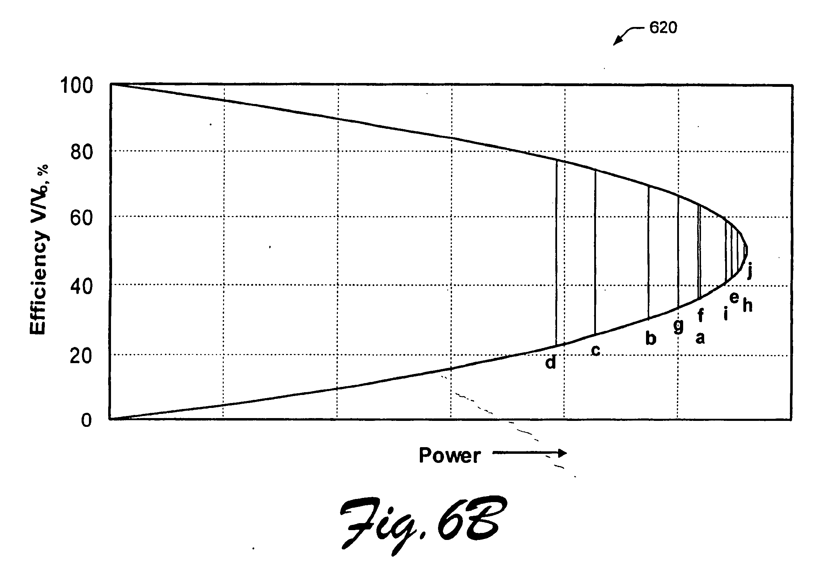

Fig. 6B shows a plot 620 of efficiency versus power for the exemplary switchable cell system of the plot 610 of Fig. 6A. Of course, as more cells are added of a given power capacity, the power axis increases in magnitude. Thus, the phenomena exhibited in the plots 610, 620 can be extended to a system with many more cells operating in series, parallel or any combination of these. A power curve for any given configuration will in general share a common operating point with other configurations as shown in the plot 610 of Fig. 6A. Each of these operating points correspond to a unique power output and will shift the switching condition laterally along the efficiency power curve as shown for an exemplary four cell system(see, e.g., the plot 620 of Fig. 6B). A fuel cell system with a large number of cells can have many more potential operating points extending over a near continuous range of power output. In an exemplary method, an operating point is chosen and implemented in an exemplary system tuned for a load specified power requirement. Operating points near maximum power output may be expected to generate a small shift in efficiency and thus will produce small shifts in temperature or heat generation over large times compared with operating points further from maximum power value. A system operating at a point relatively far from the maximum power output of the system may be expected to produce a large shift in temperature or heat generation over a relatively small time.

The number of connection configurations (m) is a function of the number of cells within the system (n). This can be expressed as: m = f(n) In an exemplary equation, N represents the number of operating points:

$$N = \sum_{k=1}^{m-1} (m - k)$$

Table 2, below, summarizes information for the number of possible unique connection configurations (m) and the corresponding number of operating points (N) for various exemplary cell stacks containing between three and eleven individual cells (n).

Table 2. Unique Configurations and Total Operating Points

| Number of cells | Number of configurations | Number of "points" |
|---|---|---|
| n | m | N |
| 3 | 3 | 3 |
| 4 | 5 | 10 |
| 5 | 7 | 21 |
| 6 | 11 1 | 55 |
| 7 | 15 | 105 |
| 8 | 22 | 231 |
| 9 | 30 | 435 |
| 10 | 43 | 903 |
| 11 | 59 | 1711 |

The information presented in Table 2 demonstrates that a fuel cell stack containing a relatively small number of cells (e.g. n=11) will have a large number of possible operating points within a range of power. Additional cells (e.g., n > 11) would further increase the number of points which will approach a limit set that can be optionally operated over a near continuous range of power outputs. Fig. 6A is illustrative of a four cell stack (n = 4) included in Table 2. Accordingly, five unique connection configurations and ten corresponding operating points exist for n = 4.

Regarding fuel consumption, if a cell is supplied a constant amount of fuel, for example, according to a low EMF efficiency state (e.g., a more serial configuration) and then switched to a high EMF efficiency state (e.g., a more parallel configuration), an excess supply of fuel will result. Hence, fuel efficiency, which is typically defined as amount of fuel reacted divided amount of fuel supplied, will decrease. However, if a cell is supplied a constant amount of fuel, for example, according to a high EMF efficiency state and then switched to a low EMF efficiency state, fuel may become limiting, or alternatively, fuel efficiency will increase because the low state utilizes more fuel than the high state. Thus, in general, for constant fuel supply, a switch from a low EMF efficiency state to a high EMF efficiency state results in excess fuel while a switch from a high EMF efficiency state to a low EMF efficiency state results in a decrease in excess fuel (e.g., perhaps even a limiting amount of fuel).

Exemplary Arrangements

As discussed above, a multiple cell system may operate at more than one state while maintaining a constant power output at a constant current and voltage condition. In addition, cell EMF and current density are variable parameters that are related to fuel consumption, EMF efficiency, etc. An exemplary arrangement allows for at least some cells in multiple cell system to be switched between parallel and series electrical arrangements. First, various exemplary arrangements are described and then various methods of operating the exemplary arrangement are described that account for power and fuel considerations.

As described herein at least some cells in a multiple cell system are operated in series and/or parallel. When cells are electrically connected in series (e.g., a positive terminal of one cell connected to a negative terminal of another cell, etc.), the total voltage output of the cells is equal to the sum of the individual cell voltages. The current flow through a cell connected in series is the same as for a single cell. In contrast, when cells are connected in parallel (e.g., positive terminals connected together and negative terminals connected together), current capacity increases. The total voltage output of cells connected in parallel is the same as that of a single cell, assuming the cells have substantially equal voltage outputs. In essence, connecting cells in parallel has an effect somewhat analogous to increasing size of electrodes and electrolyte in a single cell.

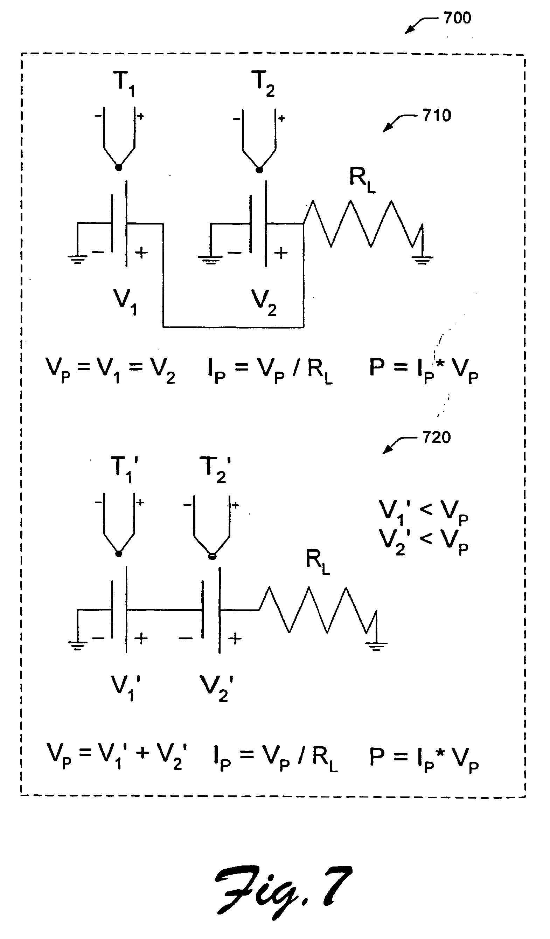

Fig. 7 shows schematics 700 of two exemplary arrangements 710, 720. A parallel arrangement 710 includes a first cell operating at a temperature $T_1$ and producing an EMF $V_1$ and a second cell operating at a temperature $T_2$ and producing an EMF $V_2$ wherein $V_1$ equals $V_2$. A load, represented by a resistor has a resistance $R_L$. The temperature measuring circuits for the first cell and the second cell are optional. In the exemplary arrangement 710, the load experiences an EMF $V_P$ that is equal to EMF $V_1$ and EMF $V_2$. Further, the arrangement produces a current $I_P$ and a power P equal to the product of $I_P$ and $V_P$. In the exemplary arrangement 710, each cell provides only part of the current $I_P$.

A series arrangement 720 includes a first cell operating at a temperature $T_1'$ and producing an EMF $V_1'$ and a second cell operating at a temperature $T_2'$ and producing an EMF $V_2'$ wherein $V_1'$ may equal $V_2'$. A load, represented by a resistor has a resistance $R_L$, as in the parallel arrangement 710. The temperature measuring circuits for the first cell and the second cell are optional. In the exemplary arrangement 720, the load experiences an EMF $V_P$ that is equal to EMF $V_1'$ plus EMF $V_2'$. Further, the arrangement produces a current $I_P$ and a power P equal to the product of $I_P$ and $V_P$. In the exemplary arrangement 720, each cell provides a current $I_P$.

A comparison of the exemplary parallel arrangement 710 to the exemplary series arrangement 720, indicates that $V_1'$ is less than $V_P$ (as well as $V_1$ and $V_2$) and that $V_2'$ is less than $V_P$ (as well as $V_1$ and $V_2$). Further, in the exemplary parallel arrangement 710, the current demand $I_P$ is distributed between the two cells whereas each cell in the exemplary arrangement 720 must supply the current demand $I_P$. Thus, given the load having resistance $R_L$ and an EMF demand of $V_P$, the exemplary series arrangement 720 may be associated with a low EMF efficiency state of operation (low EMF, high current) when compared to the exemplary parallel arrangement 710 (high EMF, low current). Hence, an exemplary manner of switching from a high EMF efficiency state to a low EMF efficiency state includes switching from a parallel arrangement of cells to a series arrangement of cells. Of course, as discussed above with respect to Figs. 5A, 5B, 6A and 6B, if switching occurs at an intersection point of two power versus current curves, then the switching may be expected to maintain a relatively constant power and current given a particular voltage or load..

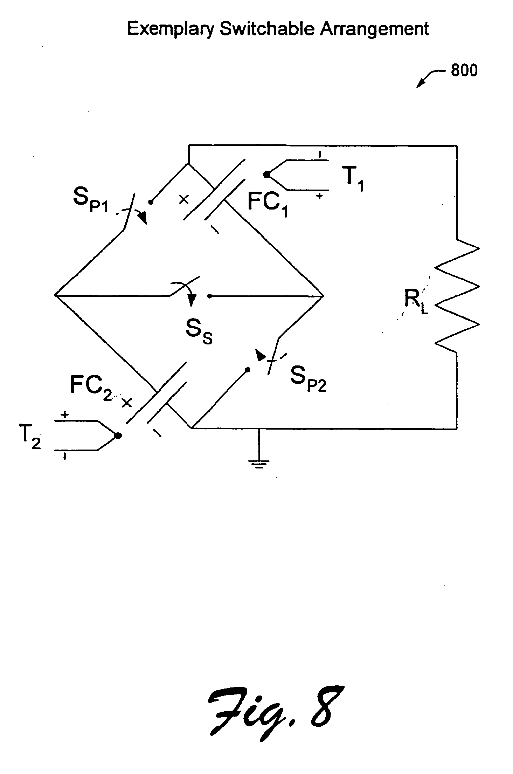

Fig. 8 shows an exemplary switchable arrangement of cells 800. The exemplary arrangement 800 includes a load having a resistance $R_L$ connected to a switchable circuit having two parallel switches $SP_1$, $SP_2$, one series switch $S_s$ and two cells $FC_1$ and $FC_2$. Also shown are temperature measurement circuits $T_1$ for $FC_1$ and $T_2$ for $FC_2$, which may be optional, substituted for or in addition to one or more circuits that measure other conditions (e.g., oxidant concentrations, waste product concentrations, etc.). When switches $SP_1$, $SP_2$ are closed and switch $S_s$ is open, then the circuit operates the cells in parallel whereas when switches $SP_1$, $SP_2$ are open and switch $S_s$ is closed, the circuit operates the cells in series. Thus, an exemplary system includes a first fuel cell capable of providing an electrical output, a second fuel cell capable of providing an electrical output and a switch circuit that includes one or more switches for arranging the electrical output of the first fuel cell and the electrical output of the second fuel cell in parallel or series. As described further below, the optional temperature measurement circuits may aid in determining when to switch from parallel to series or from series to parallel. For example, if in a parallel arrangement with an excess fuel supply, $T_1$ and/or $T_2$ fall below a set temperature, then a switch to a series arrangement may act to increase heat production and hence temperature. In this example, a temperature measurement circuit may measure $T_1$ and/or $T_2$ and then provide a signal to the switch circuit. Of course, a controller may control the switch circuit and optionally receive a signal from a temperature measurement circuit or other circuits.

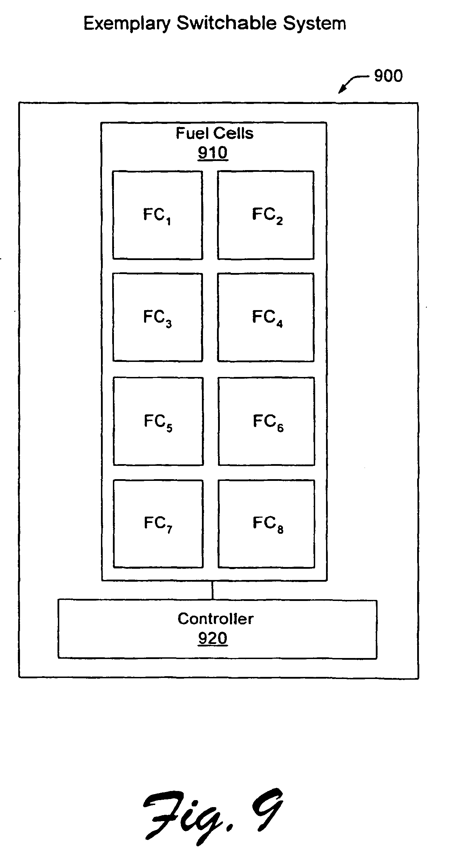

Of course, the exemplary arrangement or equivalents thereof may be replicated throughout a multiple cell system. For example, Fig. 9 shows an exemplary system 900 that includes a plurality of fuel cells 910 (e.g., $FC_1$, $FC_2$, ... $FC_N$) and a controller 920. The controller 920 controls the electrical arrangement of the fuel cells 910 wherein some or all of the fuel cells are switchable from parallel to series electrical arrangements and from series to parallel electrical arrangements. For example, a first set of cells $FC_1$ and $FC_4$ may be operating in parallel at an EMF $V_A$ while a second

set of cells $FC_2$, $FC_3$, $FC_5$, $FC_6$, $FC_7$ and $FC_8$ are operating in series at an EMF $V_B$ wherein $V_A$ is substantially equal to $V_B$. Further, the first set and the second set may be electrically arranged in parallel to a load, which will experience an EMF $V_A$. If the first set of cells $FC_1$ and $FC_4$ are switched from parallel to series (e.g., while still in parallel with the second set of cells), then the EMF for cells $FC_1$ and $FC_2$ will decrease and the first set of cells will be shifted to a lower EMF efficiency.

Exemplary Methods

Various exemplary arrangements allow for enhanced operational control of a multiple fuel cell system. For example, an exemplary method includes a supply block, wherein an excess amount of fuel is supplied to a multiple fuel cell system. Next, in a switch block, at least some of the cells are switched from a parallel to a series electrical arrangement. In general, switching maintains a constant power output to one or more loads. However, as described above, switching cells from a parallel to a series electrical arrangement can also switch the cells from a high EMF efficiency state to a low EMF efficiency state. Thus, in such circumstances, the exemplary method includes a production block, wherein heat is produced from at least some of the excess fuel because the low EMF efficiency state associated with the cells switched from parallel to series requires more fuel (e.g., a higher fuel utilization). In essence, the switch increases the fuel efficiency for the switched cells, which was defined as amount of fuel reacted to amount of fuel supplied.

In general, the production of heat associated with the increase in fuel reacted or utilized causes an increase in temperature of the cells. Hence, referring again to the exemplary schematics 700 of Fig. 7, the aforementioned exemplary method would cause $T_1{}'$ to be greater than $T_1$ and $T_2{}'$ to be greater than $T_2$. Of course, once a certain temperature is achieved, the exemplary method may switch the same cells and/or other cells in a multiple cell system from a series to a parallel electrical arrangement. Such a switch would decrease fuel utilization, assuming a constant supply of fuel, and thereby decrease heat production and hence temperature. Overall, such an exemplary method is suitable for controlling temperature of individual cells in a multiple cell system. For example, referring to the exemplary system 900 and the discussion of the first set of cells $FC_1$ and $FC_4$, a switch from parallel to series may aim to increase the temperature of cells $FC_1$ and $FC_4$.

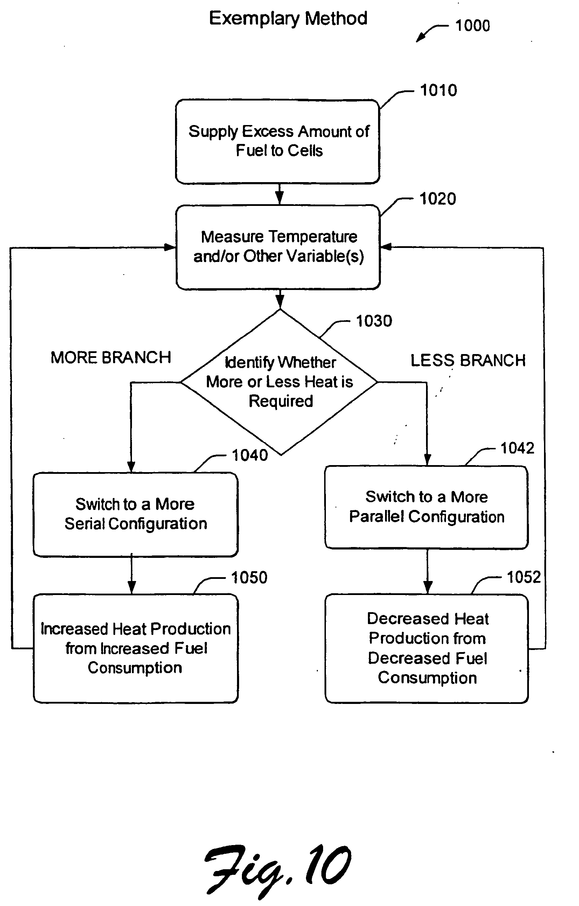

Fig. 10 shows a block diagram of another exemplary method 1000. The exemplary method 1000 includes a fuel supply block 1010, wherein an excess amount of fuel is supplied to a system of fuel cells. In a measurement block 1020, temperature and/or one or more other variables are measured or otherwise determined. Next, in a decision block 1030, a decision is made as to whether more or less heat generation is desired. The exemplary method 1000 then continues down a less heat generation branch or a more heat generation branch. The more branch includes a switching block 1040 that switches the multicell system to a more series configuration (e.g., electrical arrangement) whereas the less branch includes a switching block 1042 that switches the multicell system to a more parallel configuration (e.g., electrical arrangement). Accordingly, the more branch increases heat production in a heat production block 1050 due to increased fuel consumption while the less branch decreases heat production in a heat reduction block 1052 due to a decrease in fuel consumption.

Of course, other exemplary methods may adjust fuel supply in conjunction with switching at least some of cells in a multiple cell system from parallel to series or series to parallel electrical arrangements. Overall, switching as described herein, when combined with fuel supply considerations, provides a relatively quick and effective method for adjusting EMF efficiency and controlling temperature of at least some cells in a multiple cell system.

**Claims**

1.   A system comprising:

a first fuel cell ($FC_1$) capable of providing an electrical output;
a second fuel cell ($FC_2$) capable of providing an electrical output;
a switch circuit that includes one or more switches ($S_{P1}$, $S_{P2}$, $S_S$) for arranging the electrical output of the first fuel cell ($FC_1$) and the electrical output of the second fuel cell ($FC_2$) in parallel or series , and
a temperature measurement circuit ($T_1$, $T_2$) capable of measuring the temperature of the first fuel cell ($FC_1$) or the second fuel cell ($FC_2$) and providing a signal to the switch circuit to thereby adjust EMF efficiency and heat production of the first and second fuel cells ($FC_1$, $FC_2$).

2.   The system of claim 1, wherein the first fuel cell ($FC_1$) and the second fuel cell ($FC_2$) comprises solid oxide fuel cells.

3.   The system of claim 1, further comprising a controller (920) to control the switch circuit wherein the controller (920) is optionally configured to receive the signal from the temperature measurement circuit ($T_1$, $T_2$) and to arrange the electrical output of the first fuel cell (FC$_1$) and the electrical output of the second fuel cell (FC$_2$) in response thereto, wherein the controller (920) optionally causes the switch circuit to arrange the electrical output of the first fuel cell (FC$_1$) and the electrical output of the second fuel cell (FC$_2$) in parallel to increase EMF efficiency of the first fuel cell (FC$_1$) and the second fuel cell (FC$_2$), and wherein the controller (920) optionally causes the switch circuit to arrange the electrical output of the first fuel cell (FC$_1$) and the electrical output of the second fuel cell (FC$_2$) in series to decrease EMF efficiency of the first fuel cell (FC$_1$) and the second fuel cell (FC$_2$).

4. A method comprising:

supplying an excess amount of fuel to a multiple fuel cell system;
switching at least some of the fuel cells (FC$_1$, FC$_2$) from a parallel electrical arrangement to a series electrical arrangement; and
producing heat from at least some of the excess amount of fuel to thereby control temperature of the fuel cell system.

5. The method of claim 4, wherein the fuel comprises hydrogen and wherein the multiple fuel cell system optionally comprises solid oxide fuel cells.

6. The method of claim 4, wherein the switching does not change power provided to a load.

7. The method of claim 4, wherein the switching occurs in response to measuring a fuel cell temperature at or below a set temperature.

8. A method comprising:

supplying a substantially constant amount of fuel to a multiple fuel cell system;
deciding whether a need exists to increase heat production by the system:

in response to the deciding, switching at least some of the fuel cells (FC$_1$, FC$_2$) from a parallel electrical arrangement to a series electrical arrangement;
whereby the switching decreases EMF efficiency, and increases fuel efficiency to thereby increase heat production.

9. The method of claim 8, wherein the fuel comprises hydrogen and wherein the multiple fuel cell system optionally comprises solid oxide fuel cells.


**Patentansprüche**

1. Ein System, das folgende Merkmale aufweist:

eine erste Brennstoffzelle (FC$_1$), die in der Lage ist, eine elektrische Ausgabe zu liefern;
eine zweite Brennstoffzelle (FC$_2$), die in der Lage ist, eine elektrische Ausgabe zu liefern;
eine Schalterschaltung, die einen oder mehrere Schalter (S$_{P1}$, S$_{P2}$, S$_S$) umfasst, zum Anordnen der elektrischen Ausgabe der ersten Brennstoffzelle (FC$_1$) und der elektrischen Ausgabe der zweiten Brennstoffzelle (FC$_2$) parallel oder in Reihe, und
eine Temperaturmessschaltung (T$_1$, T$_2$), die in der Lage ist, die Temperatur der ersten Brennstoffzelle (FC$_1$) oder der zweiten Brennstoffzelle (FC$_2$) zu messen und ein Signal zu der Schalterschaltung zu liefern, um **dadurch** einen EMF-Wirkungsgrad und eine Wärmeerzeugung der ersten und zweiten Brennstoffzelle (FC$_1$, FC$_2$) einzustellen.

2. Das System gemäß Anspruch 1, bei dem die erste Brennstoffzelle (FC$_1$) und die zweite Brennstoffzelle (FC$_2$) Festoxidbrennstoffzellen aufweisen.

3. Das System gemäß Anspruch 1, das ferner eine Steuerung (920) zum Steuern der Schalterschaltung aufweist, wobei die Steuerung (920) optional konfiguriert ist, um das Signal von der Temperaturmessschaltung (T$_1$, T$_2$) zu empfangen und die elektrische Ausgabe der ersten Brennstoffzelle (FC$_1$) und die elektrische Ausgabe der zweiten Brennstoffzelle (FC$_2$) ansprechend darauf anzuordnen, wobei die Steuerung (920) optional verursacht, dass die Schalterschaltung die elektrische Ausgabe der ersten Brennstoffzelle ($FC_1$) und die elektrische Ausgabe der zweiten Brennstoffzelle ($FC_2$) parallel anordnet, um den EMF-Wirkungsgrad der ersten Brennstoffzelle ($FC_1$) und der zweiten Brennstoffzelle ($FC_2$) zu erhöhen, und wobei die Steuerung (920) optional verursacht, dass die Schalterschaltung die elektrische Ausgabe der ersten Brennstoffzelle ($FC_1$) und die elektrische Ausgabe der zweiten Brennstoffzelle ($FC_2$) in Reihe anordnet, um den EMF-Wirkungsgrad der ersten Brennstoffzelle ($FC_1$) und der zweiten Brennstoffzelle ($FC_2$) zu verringern.

4. Ein Verfahren, das folgende Schritte aufweist:

Liefern einer überschüssigen Menge an Brennstoff zu einem Mehrbrennstoffzellensystem;
Schalten zumindest einiger der Brennstoffzellen ($FC_1$, $FC_2$) von einer parallelen elektrischen Anordnung in eine elektrische Reihenanordnung; und
Erzeugen von Wärme aus zumindest einem Teil der überschüssigen Menge von Brennstoff, um **dadurch** die Temperatur des Brennstoffzellensystems zu steuern.

5. Das Verfahren gemäß Anspruch 4, bei dem der Brennstoff Wasserstoff aufweist und bei dem das Mehrbrennstoffzellensystem optional Festoxidbrennstoffzellen aufweist.

6. Das Verfahren gemäß Anspruch 4, bei dem das Schalten die Leistung nicht ändert, die zu einer Last geliefert wird.

7. Das Verfahren gemäß Anspruch 4, bei dem das Schalten ansprechend auf das Messen einer Brennstoffzellentemperatur bei oder unter einer eingestellten Temperatur auftritt.

8. Ein Verfahren, das folgende Schritte aufweist:

Liefern einer im Wesentlichen konstanten Menge eines Brennstoffs zu einem Mehrbrennstoffzellensystem;
Entscheiden, ob ein Bedarf besteht, die Wärmeerzeugung durch das System zu erhöhen:

ansprechend auf das Entscheiden, Schalten von zumindest einigen der Brennstoffzellen ($FC_1$, $FC_2$) aus einer parallelen elektrischen Anordnung in eine elektrische Reihenanordnung;

wobei das Schalten den EMF-Wirkungsgrad verringert und den Brennstoffwirkungsgrad erhöht, um **dadurch** die Wärmeerzeugung zu erhöhen.

9. Das Verfahren gemäß Anspruch 8, bei dem der Brennstoff Wasserstoff aufweist und bei dem das Mehrbrennstoffzellensystem optional Festoxidbrennstoffzellen aufweist.

**Revendications**

1. Système comprenant :

♦ une première pile à combustible ($FC_1$) capable de fournir une sortie électrique ;
♦ une deuxième pile à combustible ($FC_2$) capable de fournir une sortie électrique ;
♦ un circuit de commutation qui comprend un ou plusieurs commutateur(s) ($S_{P1}$, $S_{P2}$, $S_S$) destiné(s) à agencer la sortie électrique de la première pile à combustible ($FC_1$) et la sortie électrique de la deuxième pile à combustible ($FC_2$) en parallèle ou en série ; et
♦ un circuit de mesure de la température ($T_1$, $T_2$) capable de mesurer la température de la première pile à combustible ($FC_1$) ou de la deuxième pile à combustible ($FC_2$) et de fournir un signal au circuit de commutation de façon à ajuster le rendement de la force électromotrice et la production de chaleur de la première et de la deuxième piles à combustible ($FC_1$, $FC_2$).

2. Système selon la revendication 1, dans lequel la première pile à combustible ($FC_1$) et la deuxième pile à combustible ($FC_2$) comprennent des piles à combustible à oxyde solide.

3. Système selon la revendication 1, comprenant en outre un contrôleur (920) destiné à contrôler le circuit de commutation, dans lequel le contrôleur (920) est optionnellement configuré afin de recevoir le signal de la part du circuit de mesure de la température ($T_1$, $T_2$) et d'agencer la sortie électrique de la première pile à combustible ($FC_1$) et la

sortie électrique de la deuxième pile à combustible (FC$_2$) en réponse à celui-ci, dans lequel le contrôleur (920) provoque optionnellement l'agencement en parrallèle de la sortie électrique de la première pile à combustible (FC$_1$) et de la sortie électrique de la deuxième pile à combustible (FC$_2$) par le circuit de commutation afin d'augmenter le rendement de la force électromotrice de la première pile à combustible (FC$_1$) et de la deuxième pile à combustible (FC$_2$), et dans lequel le contrôleur (920) provoque optionnellement l'agencement en série de la sortie électrique de la première pile à combustible (FC$_1$) et de la sortie électrique de la deuxième pile à combustible (FC$_2$) par le circuit de commutation afin de diminuer le rendement de la force électromotrice de la première pile à combustible (FC$_1$) et de la deuxième pile à combustible (FC$_2$).

4.  Procédé comprenant les étapes consistant à :

    ♦ fournir une quantité excessive de combustible à un système à plusieurs piles à combustible ;
    ♦ commuter au moins certaines des piles à combustible (FC$_1$, FC$_2$) d'un agencement électrique en parallèle à un agencement électrique en série ; et
    ♦ produire de la chaleur à partir d'au moins une partie de la quantité excessive de combustible de façon à contrôler ainsi la température du système de piles à combustible.

5.  Procédé selon la revendication 4, dans lequel le combustible comprend de l'hydrogène et dans lequel le système à plusieurs piles à combustible comprend optionnellement des piles à combustible à oxyde solide.

6.  Procédé selon la revendication 4, dans lequel la commutation ne change pas la puissance fournie à une charge.

7.  Procédé selon la revendication 4, dans lequel la commutation a lieu en réponse à la mesure de la température d'une pile à combustible, identique ou inférieure à une température définie.

8.  Procédé comprenant les étapes consistant à :

    ♦ fournir une quantité sensiblement constante de combustible à un système à plusieurs piles à combustible ;
    ♦ décider si il est nécessaire ou non d'augmenter la production de chaleur par le système ;
    ♦ en réponse à la décision, commuter au moins certaines des piles à combustible (FC$_1$, FC$_2$) d'un agencement électrique en parallèle à un agencement électrique en série ;
    ♦ moyennant quoi la commutation diminue le rendement de la force électromotrice, et augmente le rendement énergétique de façon à augmenter ainsi la production de chaleur.

9.  Procédé selon la revendication 8, dans lequel le combustible comprend de l'hydrogène et dans lequel le système à plusieurs piles à combustible comprend optionnellement des piles à combustible à oxyde solide.

EXEMPLARY FUEL CELL

100

124

CATHODE
114

ELECTROLYTE
118

ANODE
110

ELECTRONS (•)

OXYGEN IONS

OXYGEN

HYDROGEN

PROTONS
(E.G., HYDROGEN IONS)

WATER

*Fig. 1*
*(Prior Art)*

## Hydrogen Utilization

*Fig. 2*

Exemplary Fuel Cell
Performance

— 300

*Fig. 3*

Exemplary FuelCell
(approx. 700°C)

Fig. 4A

Exemplary FuelCell
(approx. 700°C)                      420

*Fig. 4B*

Fig. 5A

Fig. 58

Fig. 6A

620

d    c    b    g    a    f    i    e    h    j

Power ⟶

Efficiency V/V, %

100   80   60   40   20   0

*Fig. 6B*

$V_P = V_1 = V_2 \qquad I_P = V_P / R_L \qquad P = I_P * V_P$

$V_1' < V_P$
$V_2' < V_P$

$V_P = V_1' + V_2' \qquad I_P = V_P / R_L \qquad P = I_P * V_P$

*Fig. 7*

Exemplary Switchable Arrangement

*Fig. 8*

Exemplary Switchable System

/— 900

Fuel Cells
910

| | |
|---|---|
| FC$_1$ | FC$_2$ |
| FC$_3$ | FC$_4$ |
| FC$_5$ | FC$_6$ |
| FC$_7$ | FC$_8$ |

Controller
920

*Fig. 9*

Exemplary Method — 1000

Supply Excess Amount of
Fuel to Cells — 1010

Measure Temperature
and/or Other Variable(s) — 1020

MORE BRANCH

Identify Whether
More or Less Heat is
Required — 1030

LESS BRANCH

Switch to a More
Serial Configuration — 1040

Switch to a More
Parallel Configuration — 1042

Increased Heat Production
from Increased Fuel
Consumption — 1050

Decreased Heat
Production from
Decreased Fuel
Consumption — 1052

*Fig. 10*

**EP 1 521 327 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1294039 A1
- US 6312846 B1
- US 20020187375 A